# EUROPÄISCHE PATENTANMELDUNG

(11) **EP 2 458 470 A2**
(43) Veröffentlichungstag der Anmeldung: **30.05.2012**
(21) Anmeldenummer: 11190535.2
(22) Anmeldetag: 24.11.2011
(51) Int. Cl.: G05D 16/20, F16K 7/04

(54) **Regelventil zum Druckabbau**

(30) Priorität: 30.11.2010 DE 102010062195
(71) Anmelder: Krones AG, 93073 Neutraubling (DE)
(72) Erfinder: Richter, Volker, 95671 Bärnau (DE); Runge, Torsten, 94315 Straubing (DE)
(74) Vertreter: Grünecker, Kinkeldey, Stockmair & Schwanhäusser

(57) **Zusammenfassung**

Regelventil (1) zum Druckabbau insbesondere für feststoffhaltige Flüssigkeiten mit einem Einlass (3) und einem Auslass (4) und einem Kanal zwischen Einlass (3) und Auslass (4). Erfindungsgemäß ist der Kanal als elastischer Durchflusskanal (5) ausgebildet mit einem freien Leitungsquerschnitt, der entlang seiner Längsachse (L) über einen ausgedehnten Leitungsabschnitt (LA) reduzierbar ist.

## Beschreibung

Die Erfindung betrifft ein Regelventil zum Druckabbau insbesondere für feststoffhaltige Flüssigkeiten, nach dem Oberbegriff des Anspruch 1.

Ein derartiges Regelventil ist zum Beispiel aus DE 11 2005 000 683 T5 bekannt. Es umfasst zwei Kammern mit Einlass und Auslass und einen die beiden Kammern verbindenden Kanal, der durch eine Trennvorrichtung, hier eine von einer Feder vorgespannte Membran, verschlossen wird. Sobald der Druck des Produkts im Einlass größer ist als der Federdruck der Vorspannfeder, öffnet die Trennvorrichtung einen kleinen Spalt des Kanals und die Flüssigkeit kann in die Auslasskammer fließen. Beim Durchfließen des Spalts wird der Druck der Flüssigkeit auf sehr kurzer Wegstrecke abgebaut. Wenn derartige Ventile in der Lebensmitteltechnik für flüssige Lebensmittel wie Softdrinks, Tees oder Säfte eingesetzt werden, die feste Bestandteile aufweisen, beispielsweise Fasern, Fruchtsäckchen oder Fruchtzellen, werden diese beim Durchlaufen dieses Spalts hohen mechanischen Scherbelastungen ausgesetzt, was eine Verschlechterung der Qualität oder des Geschmacks des Produkts bewirken kann.

Der Erfindung liegt daher die Aufgabe zugrunde, ein Regelventil zur Verfügung zu stellen, das insbesondere auch in der Lebensmittelindustrie für feststoffhaltige Flüssigkeiten so eingesetzt werden kann, dass es in einer einfachen und schonenden Weise sicherstellt, dass das unter erhöhtem Druck stehende Produkt mit einer möglichst geringen mechanischen Belastung druckreduziert wird.

Dies wird erfindungsgemäß bei einem gattungsgemäßen Ventil dadurch erreicht, dass der verbindende Kanal als elastischer Durchflusskanal ausgebildet ist mit einem freien Leitungsquerschnitt, der entlang seiner Längsachse über einen ausgedehnten Leitungsabschnitt veränderbar, insbesondere aber reduzierbar ist.

Fließt ein unter hohem Druck stehendes Produkt durch den reduzierten Leitungsquerschnitt des als ausgedehnter Leitungsabschnitt ausgebildeten Durchflusskanals, so erhöht sich aufgrund der Volumenerhaltung die Fließgeschwindigkeit des Produkts, wodurch eine rein physikalische Druckreduktion erzielbar ist. Die Druckreduzierung des Produkts erfolgt aber allmählich über den ausgedehnten Leitungsbereich, wobei die mechanische Belastung für das Produkt aufgrund des langen durchströmten Leitungsquerschnitts im Durchflusskanal gering gehalten werden kann. Die Scherbelastung des Produkts kann aufgrund des großen freien Querschnitts der produktführenden Leitung deutlich verringert werden.

Vorzugsweise kann das Regelventil ein Gehäuse aufweisen, in dem Einlass, Auslass und der Kanal angeordnet sind, wobei der Kanal den Einlass und den Auslass verbindet. Der Kanal ist als elastischer Durchflusskanal ausgebildet, der mit der regulären Produktleitung gekoppelt ist. Auf diese Weise kann ein stabiler Halt und ein sicheres Zusammenwirken der Komponenten des Regelventils erreicht werden.

Bei einer weiteren bevorzugten Ausführungsform ist am Regelventil ein entlang der Längsachse ausgedehnter Regelkolben angeordnet, welcher durch wenigstens einen, bevorzugt zwei, Regelantriebe bewegbar ist, die am Gehäuse angeordnet sein können. Die Kontrolle der Regelantriebe kann durch eine Steuerung erfolgen.

Bei einer weiteren bevorzugten Ausführungsform sind am Regelventil wenigstens zwei entlang der Längsachse ausgedehnte Regelkolben angeordnet. Jeder Regelkolben ist mit Hilfe wenigstens eines Regelantriebs unabhängig von anderen bewegbar. Die Kontrolle der Regelantriebe kann durch eine Steuerung erfolgen. Durch mehrere derartige Regelkolben kann die wirksam werdende Kolbenfläche variiert und an das Produkt angepasst werden.

Vorzugsweise sind die Regelkolben in einer bezüglich der Längsachse des Durchflusskanals vertikalen Richtung bewegbar. Bei der Bewegung eines oder mehrerer Regelkolben zumindest auch in vertikaler Richtung relativ zum Durchflusskanal wirkt die Kolbenfläche mit dem elastischen Durchflusskanal und dem Gehäuse zusammen, sodass der freie Leitungsquerschnitt des Durchflusskanals verändert wird. Unter einer Bewegbarkeit in vertikaler Richtung wird verstanden, dass wenigstens ein Teil des Regelkolbens zumindest auch in der gegenüber der Längsachse vertikalen Richtung bewegbar ist. Damit kann es sich auch um eine Bewegung handeln, die bezüglich der vertikalen Richtung schräg ist oder auch um eine Schwenkbewegung bezüglich einer vorgegebenen Achse. Es wäre jedoch auch möglich, dass der Regelkolben auf ein weiteres Element, etwa eine Membran, einwirkt und dieses gegen den Durchflusskanal presst. In diesem Fall kann die Membran auch zur dynamischen Abdichtung des Durchlasskanals verwendet werden und damit auch Bestandteil dessen sein.

Die Verwendung eines einzelnen Regelkolbens stellt eine einfache und günstige Möglichkeit zur Änderung des freien Leitungsquerschnitts des Durchflusskanals dar. Unter Verwendung mehrerer Regelkolben kann dagegen auch ein vorgegebenes Querschnittsprofil in den Durchflusskanal eingeprägt werden. So ist es beispielsweise möglich, ein Querschnittsprofil festzulegen, das auf eine bestimmte Festkörpergröße des Produkts angepasst ist.

Bei einer weiteren vorteilhaften Ausführung ist das Regelventil so ausgelegt, dass der Leitungsabschnitt einen Innendurchmesser von 16-130 mm aufweist. Insbesondere wird ein minimaler Innendurchmesser von mehr als 16 mm verwendet, damit einerseits der freie Leitungsquerschnitt ausreichend groß und veränderbar ist und andererseits die für die Produktion benötigten Volumenströme erzielt werden.

Bei einer weiteren bevorzugten Ausführung ist das Regelventil so ausgelegt, dass der Leitungsabschnitt eine Länge von bis zu 0,3 - 3 m aufweist. Insbesondere weist der Leitungsabschnitt eine minimale Länge von mehr als 0,3 m auf, damit das Produkt über eine ausreichende Laufstrecke druckreduziert wird.

Bei einer weiteren bevorzugten Ausführung ist das Regelventil so ausgelegt, dass es eine Druckreduzierung des Produkts von bis zu 10 bar bewirken kann. Das Regelventil wird dabei insbesondere für den Abbau von Druckdifferenzen von 1,5 bar und mehr eingesetzt.

Bei einer weiteren bevorzugten Ausführung ist das Regelventil so ausgelegt, dass es einen Volumenstrom von bis zu 90 m³/h verarbeiten kann. Das Regelventil wird dabei insbesondere für die Verarbeitung von Volumenströmen von 1 m³/h und mehr eingesetzt.

Weitere Vorteile und Ausführungsformen ergeben sich aus den beigefügten Zeichnungen. Darin zeigen:

Fig. 1 eine schematische Seitenansicht eines erfindungsgemäßen Regelventils;

Fig. 2 eine Querschnittsdarstellung des Durchflusskanals entlang II - II der Fig. 1 mit nicht reduziertem (nicht schattiert) und reduziertem (schattiert) Querschnitt;

Fig. 3 eine Darstellung des erfindungsgemäßen Regelventils gemäß einer ersten Ausführungsform im Längsschnitt;

Fig. 4 eine Darstellung des erfindungsgemäßen Regelventils gemäß einer zweiten Ausführungsform im Längsschnitt.

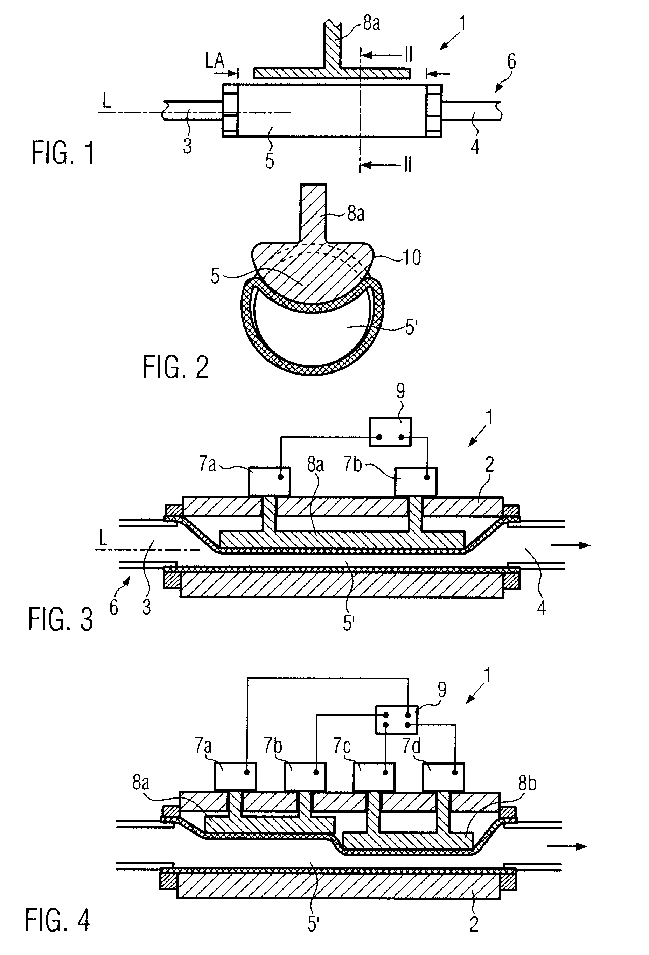

Fig. 1 zeigt ein erfindungsgemäßes Regelventil **1.** Dieses Regelventil **1** weist einen Einlass **3** und einen Auslass **4** und einen zwischen Einlass **3** und Auslass **4** befindlichen Kanal auf. Dieser Kanal ist als elastischer Durchflusskanal **5** ausgebildet, der mit der regulären Produktleitung **6** gekoppelt ist. Der Durchflusskanal **5** besitzt einen Leitungsabschnitt LA, der aus elastischem Material besteht, wie beispielsweise Silikongummi oder PVC, und der entlang seiner Längsachse L ausgedehnt ist. Der elastische Durchflusskanals **5** ist somit über einen großen Leitungsabschnitt LA hinsichtlich seines freien Leitungsquerschnitts veränderbar, insbesondere aber reduzierbar.

Fig. 2 zeigt eine Querschnittsdarstellung des elastischen Leitungsabschnitts des Durchflusskanals eines erfindungsgemäßen Regelventils. Man erkennt den kreisförmigen Querschnitt des Durchflussbereichs im reduzierten (**5**') und nicht reduzierten (**5**) Zustand (schattiert). Die Reduzierung erfolgt in dieser Darstellung beispielhaft durch einen Regelkolben **8a**, der eine runde Kolbenfläche **10** aufweist.

Fig. 3 zeigt eine konkrete Ausführungsform des erfindungsgemäßen Regelventils. Man erkennt zwei Regelantriebe **7a** und **7b**, die mittels einer (nicht gezeigten) Befestigungseinrichtung mit dem Gehäuse **2** verbunden sind. Das Bezugszeichen **9** bezeichnet die Steuerung zur Kontrolle der Regelantriebe. Die beiden Regelantriebe bewegen einen Regelkolben **8a** in vertikaler Richtung relativ zum Durchlasskanal.

Der Regelkolben **8a** weist einen stempelförmigen Körper auf mit einer planen Kolbenfläche **10** an seiner Unterseite, die zum Durchflusskanal orientiert angeordnet ist. Der Regelkolben und die Kolbenflächen können aber auch eine andere Form besitzen, die zur Einwirkung auf den Durchflusskanal geeignet ist. Ferner ist es auch möglich, dass eine Feder den Regelkolben gegen die Gravitation nach oben hin vorspannt, d.h. der Federdruck drückt den Regelkolben weg vom Durchflusskanal. Erst die Bewegung des Regelkolbens drückt die Kolbenfläche **10** gegen den Durchlasskanal **5**, wodurch zusammen mit dem Gehäuse **2** eine Kraft auf den Durchlasskanal **5** ausgeübt wird, die den Durchlasskanal in vertikaler Richtung staucht. Entsprechend wird der freie Leitungsquerschnitt eingeschränkt.

Fig. 4 zeigt eine weitere Ausführungsform eines erfindungsgemäßen Regelventils. Auch hier sind, wie in dem oben gezeigten Fall, die Regelantriebe **7a-7d** am Gehäuse angeordnet und mit einer gemeinsamen Steuerung verbunden. Im Gegensatz zu der in Fig. 2 gezeigten Ausführungsform sind hier jedoch zwei ausgedehnte Regelkolben 8a**, 8b** angeordnet, die von jeweils zwei Regelantrieben unabhängig voneinander bewegbar sind. Es ist erkennbar, dass durch die unabhängige Bewegung der Regelkolben ein definiertes Querschnittsprofil entlang der Längsrichtung des Durchlasskanals bewirkt werden kann.

## Patentansprüche

1. Regelventil (**1**) zum Druckabbau insbesondere für feststoffhaltige Flüssigkeiten mit einem Einlass (**3**) und einem Auslass (**4**) und einem Kanal zwischen Einlass (**3**) und Auslass (**4**), **dadurch gekennzeichnet, dass** der Kanal als elastischer Durchflusskanal (**5**) ausgebildet ist mit einem freien Leitungsquerschnitt, der entlang seiner Längsachse (L) über einen ausgedehnten Leitungsabschnitt (LA) reduzierbar ist.

2. Regelventil (**1**) gemäß Anspruch 1, **dadurch gekennzeichnet, dass** Einlass (**3**), Auslass (**4**) und elastischer Durchflusskanal (**5**) in einem Gehäuse (**2**) angeordnet sind.

3. Regelventil (**1**) gemäß Anspruch 2, **dadurch gekennzeichnet, dass** das Regelventil (**1**) einen entlang der Längsachse (L) ausgedehnten Regelkolben (**8a**) aufweist, der durch wenigstens einen, bevorzugt zwei, Regelantriebe (**7a**) bewegbar ist und von einer Steuerung (**9**) kontrolliert wird.

4. Regelventil (**1**) gemäß Anspruch 2, **dadurch gekennzeichnet, dass** das Regelventil (**1**) wenigstens zwei entlang der Längsachse (L) ausgedehnte Regelkolben (**8a**, **8b**) aufweist, die jeweils durch mindestens einen bevorzugt zwei Regelantriebe (**7a**, **7b**) unabhängig voneinander bewegbar sind und von einer Steuerung (**9**) kontrolliert werden.

5. Regelventil (**1**) nach einem der Ansprüche 3 oder 4, **dadurch gekennzeichnet, dass** die Regelkolben (**8a**, **8b**) relativ zum Durchflusskanal (**5**) vertikal bewegbar sind, wobei durch eine Bewegung der Regelkolben (**8a**, **8b**) die Kolbenfläche mit dem Durchflusskanal (**5**) und dem Gehäuse (**2**) so zusammenwirkt, dass der freie Leitungsquerschnitt des Durchflusskanals (**5**) veränderbar ist.

6. Regelventil (**1**) nach wenigstens einem der vorgenannten Ansprüche, **dadurch gekennzeichnet, dass** der Leitungsabschnitt (LA) einen Innendurchmesser von 16 - 130 mm aufweist.

7. Regelventil (**1**) nach wenigstens einem der vorgenannten Ansprüche, **dadurch gekennzeichnet, dass** der Leitungsabschnitt (LA) eine Länge von 0,3 - 3 m aufweist.

8. Regelventil (**1**) nach wenigstens einem der vorgenannten Ansprüche, **dadurch gekennzeichnet, dass** das Regelventil (**1**) so ausgelegt ist, dass es eine Druckreduzierung des Produkts von bis zu 10 bar bewirken kann.

9. Regelventil (**1**) nach wenigstens einem der vorgenannten Ansprüche, **dadurch gekennzeichnet, dass** das Regelventil (**1**) so ausgelegt, dass es einen Volumenstrom von bis zu 90 m³/h verarbeiten kann.
